# EUROPÄISCHE PATENTSCHRIFT

(11) **EP 0 898 139 B1**
(45) Veröffentlichungstag und Bekanntmachung des Hinweises auf die Patenterteilung: **27.08.2003**
(21) Anmeldenummer: 98810743.9
(22) Anmeldetag: 31.07.1998
(51) Int. Cl.: F28F 1/12, B29C 47/82

(54) **Extruderrohr mit einem Wärmetauscher**
Extruderbarrel with a heat exchanger
Tube d'extrudeuse avec un échangeur de chaleur

(30) Priorität: 19.08.1997 CH 194097
(43) Veröffentlichungstag der Anmeldung: 24.02.1999
(73) Patentinhaber: GRÜTER ELEKTROAPPARATE AG, CH-8303 Bassersdorf (CH)
(72) Erfinder: Kühler, Paul, 8303 Bassersdorf (CH)
(74) Vertreter: BOVARD AG - Patentanwälte

(56) Entgegenhaltungen:
- EP-A- 0 611 251
- FR-A- 1 462 160
- GB-A- 1 301 666
- GB-A- 2 037 069
- US-A- 2 589 262
- US-A- 3 263 313
- US-A- 3 716 750
- US-A- 3 743 252
- US-A- 3 907 032
- US-A- 4 059 882
- US-A- 5 200 205
- US-A- 5 561 338

## Beschreibung

Die Erfindung betrifft ein Extruderrohr mit einem Wärmetauscher und einer Heizmanschette.

Es sind verschiedene Wärmetauscher bekannt, die Lamellen aufweisen. Beispielsweise betrifft die Patentanmeldung GB-A-2 037 069 ein Magnetron mit einer dieses umgebenden Kühlvorrichtung mit Kühlrippen. Im Patent US-A-2 589 262 ist ein Wärmetauscher mit längs verlaufenden Kühlrippen beschrieben.

Auch die Verwendung von Wärmetauscher zum Kühlen von Extruderrohren ist bereits bekannt. Das Patent US-A-3 743 252 betrifft ein luftgekühltes Extruderrohr, bei dem Kühlrippen quer zum Extruderrohr angeordnet sind. Das Dokument EP-A-0 611 251 beschreibt ein Verfahren und eine Vorrichtung zur Kühlung des Zylinders eines Extruders mit Luft, wobei die Luft in Längsrichtung des Zylinders geführt wird. Gemäss dem Patent US-A-5 200 205 sind entlang eines Extruderrohres abwechselnd Heizelemente und Kühleinrichtungen angeordnet, wobei die Kühleinrichtungen Rippen und Gebläse enthalten.

Beim Extruderrohr gemäss dem zuletzt erwähnten Patent US-A-5 200 205 besteht ein Nachteil darin, dass die Temperaturverteilung auf dem Extruderrohr nicht homogen und der Wirkungsgrad der Kühlung nicht optimal ist.

Ausgehend von diesem Stand der Technik liegt der Erfindung die Aufgabe zugrunde, ein Extruderrohr vorzuschlagen, bei dem die Temperaturverteilung längs der Extruderrohrs gleichmässig ist und bei dem der Wärmeübergang von der Heizmanschette auf das Extruderrohr überall gleich ist.

Diese Aufgabe wird erfindungsgemäss durch die Merkmale des Anspruchs 1 gelöst.

Die Erfindung weist den Vorteil auf, dass der Wärmeinhalt (Enthalpie) dieses Wärmetauschers kleiner als derjenige der bekannten Systeme ist. Dadurch lässt sich eine reaktionsschnelle, exakte Temperaturführung durch Regler, beispielsweise bei einer hohen Extrusionsgeschwindigkeit, erreichen.

Im weiteren wird der Vorteil erzielt, dass mehrere, jeweils aus einem Wärmetauscher und einer Heizmanschette bestehende Anordnungen aneinandergereiht werden können, wobei auch nur ein Wärmetauscher vorgesehen sein kann, der länger ausgebildet ist. Es bietet sich die Möglichkeit, zwischen zwei Wärmetauschern eine Temperaturmesssonde in das Extruderrohr einzuführen.

Bevorzugte Ausführungsformen ergeben sich aus den abhängigen Ansprüchen.

Im folgenden werden anhand der beiliegenden Zeichnung Ausführungsbeispiele der Erfindung näher erläutert. Es zeigen
Fig. 1 einen Querschnitt gemäss Linie I-I der Fig. 2 durch einen Wärmetauscher für eine Heiz- und Kühlanordnung eines Extruderrohres,
Fig. 2 einen Längsschnitt durch drei, elementweise hintereinander angeordnete Wärmetauscher auf einem Extruderrohr mit einer Temperaturmesssonde,
Fig. 3 einen Teil der Heiz- und Kühllamellen in ungebogenem Zustand,
Fig. 4 die Heiz- und Kühllamellen gemäss Fig. 3, ohne Korrektur gebogen,
Fig. 5 einen Teil der Heiz- und Kühllamellen mit Vorformung an den Stirnseiten,
Fig. 6 die Lamellen gemäss Fig. 5 in zusammengebogenem Zustand,
Fig. 7 einen Teil der Heiz- und Kühllamellen mit verdickten Stirnseiten,
Fig. 8 die Heiz- und Kühllamellen gemäss Fig. 7 in zusammengebogenem Zustand,
Fig. 9 einen Teil der Heiz- und Kühllamellen ohne Vorbiegung in ungebogenem und gebogenem Zustand mit dem zugehörigen Biegespannungsverlauf,
Fig. 10 Heiz- und Kühllamellen mit verdickter Stirnseite in ungebogenem und gebogenem Zustand mit zugehörigem Biegespannungsverlauf,
Fig. 11 einen Teil der Heiz- und Kühllamellen mit Sicken,
Fig. 12 eine Längsansicht einer Lamelle gemäss Fig. 11,
Fig. 13 einen Teil der Heiz- und Kühllamellen mit schräg verlaufenden Sicken,
Fig. 14 eine Längsansicht einer Lamelle gemäss Fig. 13 mit schräg verlaufenden Sicken,
Fig. 15 die benachbarte Lamelle des nächstfolgenden Wärmetauschers mit entgegengesetzt schräg verlaufenden Sicken,
Fig. 16 einen Teil der Heiz- und Kühllamellen mit konisch verlaufenden Sicken,
Fig. 17 eine Längsansicht einer Lamelle gemäss Fig. 16 mit schräg verlaufenden konischen Sicken,
Fig. 18 die benachbarte Lamelle des nächstfolgenden Wärmetauschers mit entgegengesetzt schräg verlaufenden konischen Sicken,
Fig. 19 einen Schnitt gemäss Linie XIX-XIX der Fig. 16,
Fig. 20 einen Teil der Heiz- und Kühllamellen mit konischen, in der Breite der Lamellen getrennten Sicken,
Fig. 21 eine Längsansicht einer Lamelle gemäss Fig. 20,
Fig. 22 die Enden des Lamellenbandes,
Fig. 23 eine Ansicht der Temperaturmesssonde,
Fig. 24 eine perspektivische Darstellung der zwischen den Lamellen zweier Wärmetauscher in den Extrusionszylinder eingebauten Temperaturmesssonde,
Fig. 25 eine perspektivische Darstellung eines Teils der Heiz- und Kühllamellen mit zickzackförmig angeordneten Sicken,
Fig. 26 einen Schnitt gemäss Linie XXVI-XXVI der Fig. 25,
Fig. 27 eine perspektivische Darstellung eines Teils der Heiz- und Kühllamellen, wobei das ganze Profil eine Zickzack-Verstärkung aufweist.

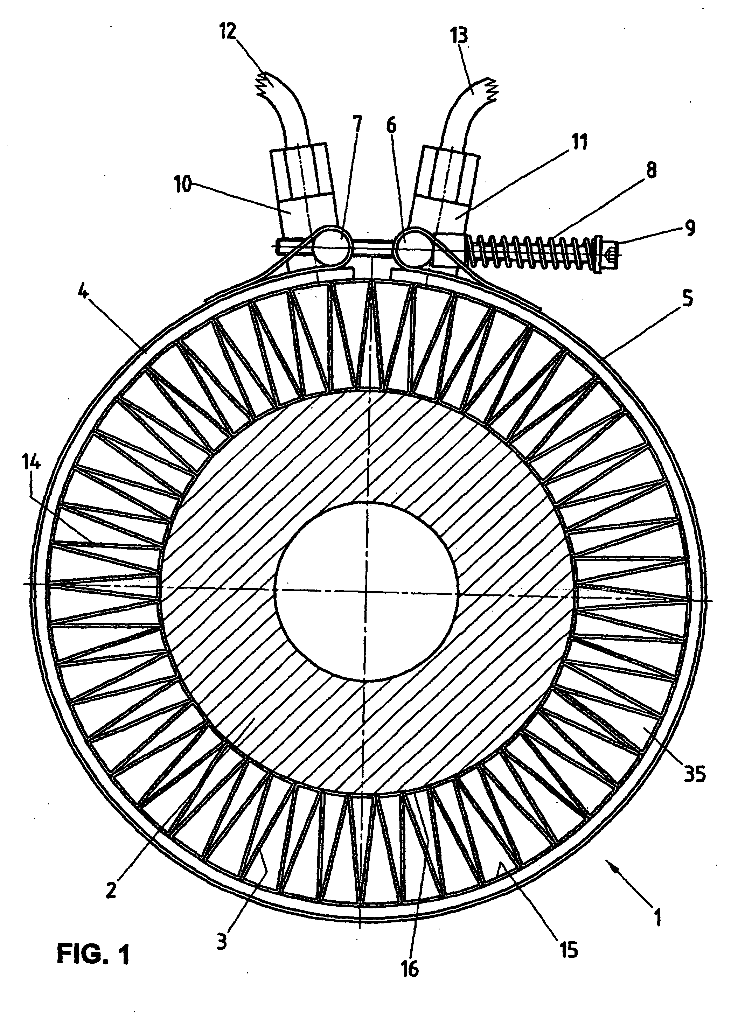

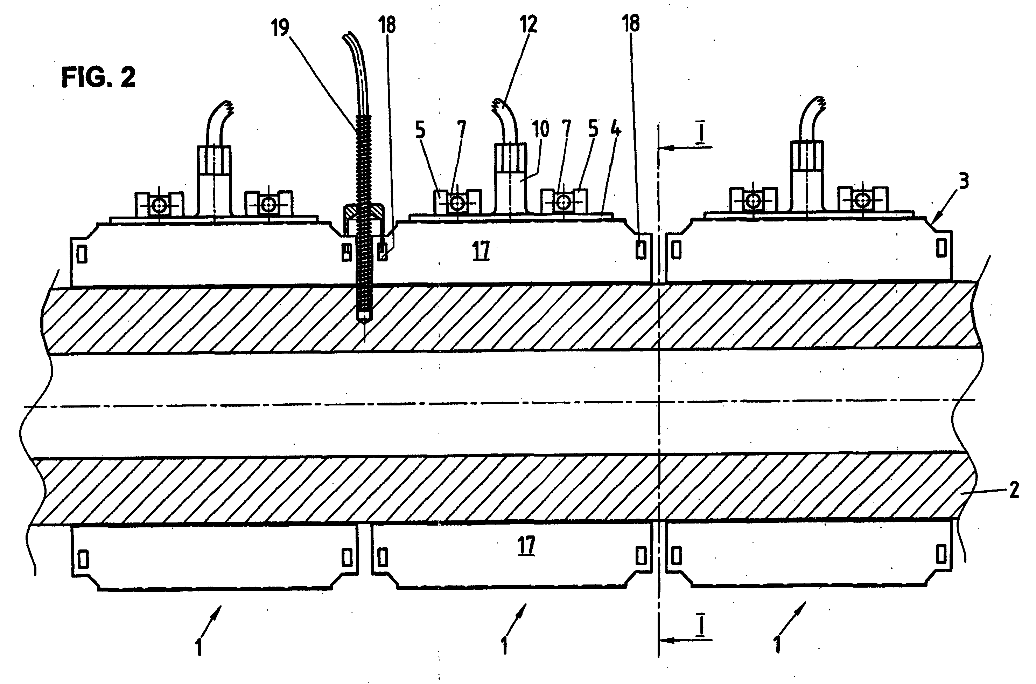

In Fig.1 ist die Heiz- und Kühlanordnung für den Extrusionszylinder 2 im Querschnitt gemäss Linie I-I der Fig. 2 dargestellt. Sie umfasst den aus einer Lamellenanordnung 3 bestehenden Wärmetauscher und eine Wärmemanschette 4. Der Wärmetauscher 3 ist konzentrisch zum Extruderrohr 2 angeordnet. Die Heizmanschette 4 ist konzentrisch zum Wärmetauscher 3 angeordnet. Die Wärmemanschette 4 wird durch zwei Metallbänder 5, die an den Enden mit Stiften 6 und 7 versehen sind, zusammengehalten. Zwei mit Federn 8 versehene Schrauben 9 sind durch die Stifte 6 geführt und in die Stifte 7 eingeschraubt. Durch die Federn 8 wird gewährleistet, dass sich bei der Erwärmung des Wärmetauschers 3 die Metallbänder 5 für die Wärmemanschette 4 etwas ausdehnen können. Durch mit der Wärmemanschette verbundene Anschlüsse 10 und 11 sind die Anschlusskabel 12 und 13 für die Wärmemanschette geführt. Die Lamellen 14 sind zusammenhängend ausgebildet, schräg zueinander angeordnet und an ihrem der Heizmanschette 4 anliegenden Teil 15 und ihrem dem Extruderrohr 2 anliegenden Teil 16 umgebogen. Sie sind hohlzylinderförmig ausgebildet, wobei die Stirnseiten 15, 16, welche die Lamellen 14 an ihren Enden verbinden die Oberflächen des Hohlzylinders bilden. Die Wärme wird von aussen von der Heizmanschette 4 durch die Lamellen 14 auf das Extruderrohr 2 geleitet und heizt diesen auf. Wenn der Extruder läuft, wird Wärme erzeugt, die durch den Wärmetauscher 3 abgeführt wird. Durch die Zwischenräume 35 zwischen den Lamellen kann die Kühlluft geblasen werden.

Fig. 2 zeigt einen Längsschnitt durch mehrere, elementweise aneinandergereihte Heiz- und Kühlanordnungen 1 mit Wärmetauschern 3. Jede zweite Lamelle 17 ist verlängert und weist an ihren Enden je eine Öffnung 18 zum Einhängen einer Temperaturmesssonde 19 auf. Mit der Temperaturmesssonde 19 wird die Temperatur des Extruderrohres 2 gemessen. Konzentrisch zu den Heiz- und Kühlanordnungen 1 ist ein Rohr mit Kühlgebläse angeordnet.

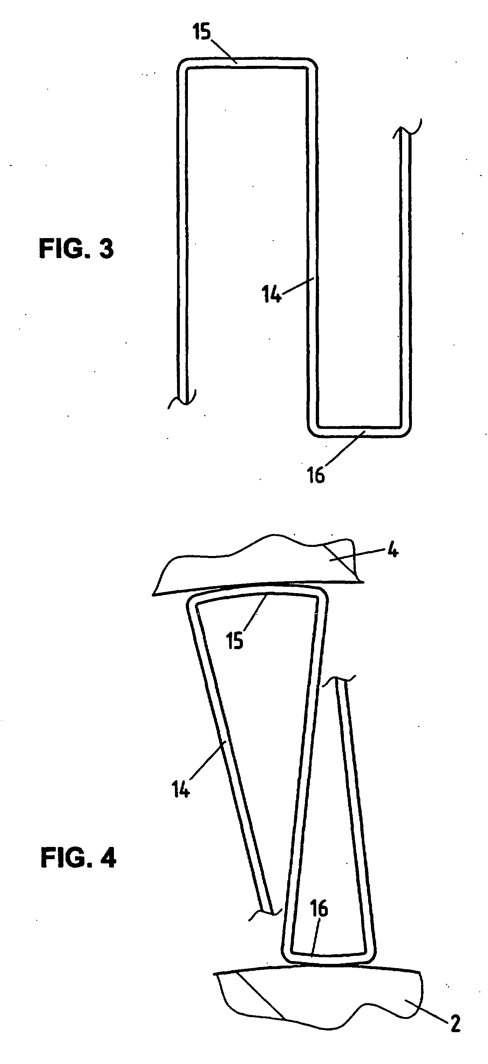

Fig. 3 zeigt einen Teil der ungebogenen Lamellen 14 mit den sie verbindenden Stirnseiten 15, 16, ohne Vorbiegung.

Fig. 4 zeigt einen Teil der ohne Korrektur gebogenen Lamellen 14. Diese sind in den Bereichen 15 und 16, wo sie an der Heizmanschette 4 resp. am Extrusionszylinder 2 anliegen, im Schnitt etwa parabelförmig ausgebildet.

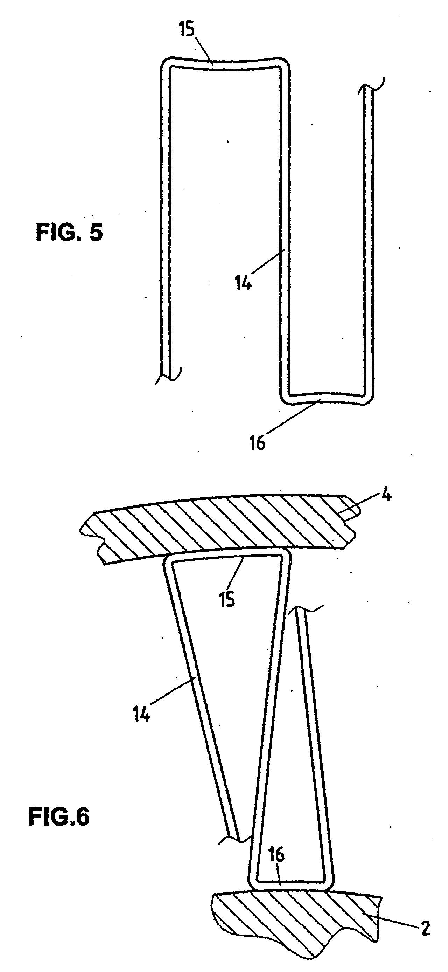

Fig. 5 zeigt einen Teil der Lamellen 14, die an ihren Stirnseiten 15 und 16 im Schnitt etwa parabelförmig verformt sind.

Fig. 6 zeigt die Lamellen gemäss Fig. 5 in zusammengebogenem Zustand für die Montage zwischen Heizmanschette 4 und Extruderrohr 2. Die Stirnseiten 15 und 16 der Lamellen 14 weisen die gleiche Krümmung auf wie die Innenoberfläche der Wärmemanschette, resp. die Aussenoberfläche des Extrusionszylinders.

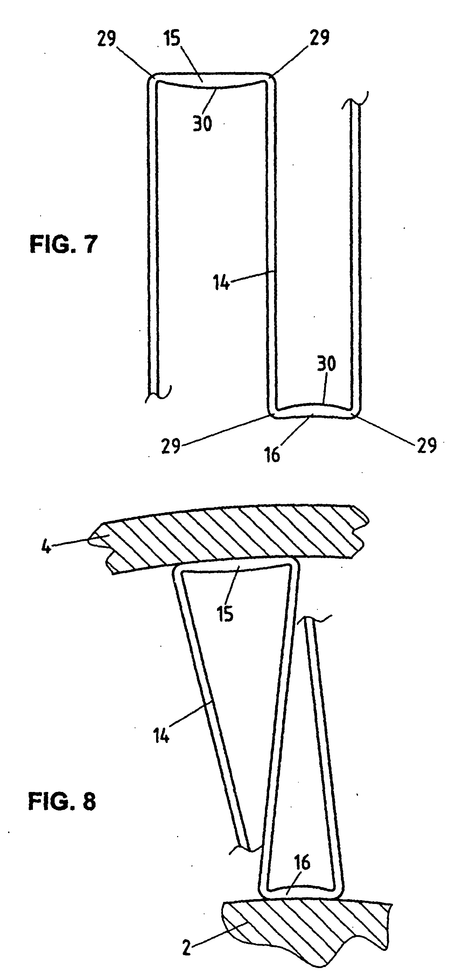

Fig. 7 zeigt einen Teil der Lamellen 14 mit Verdickungen an den Stirnseiten 15 und 16. Diese Verdickungen ergeben beim Zusammenbiegen der Lamellen einen konstanten Krümmungsradius der Stirnseiten.

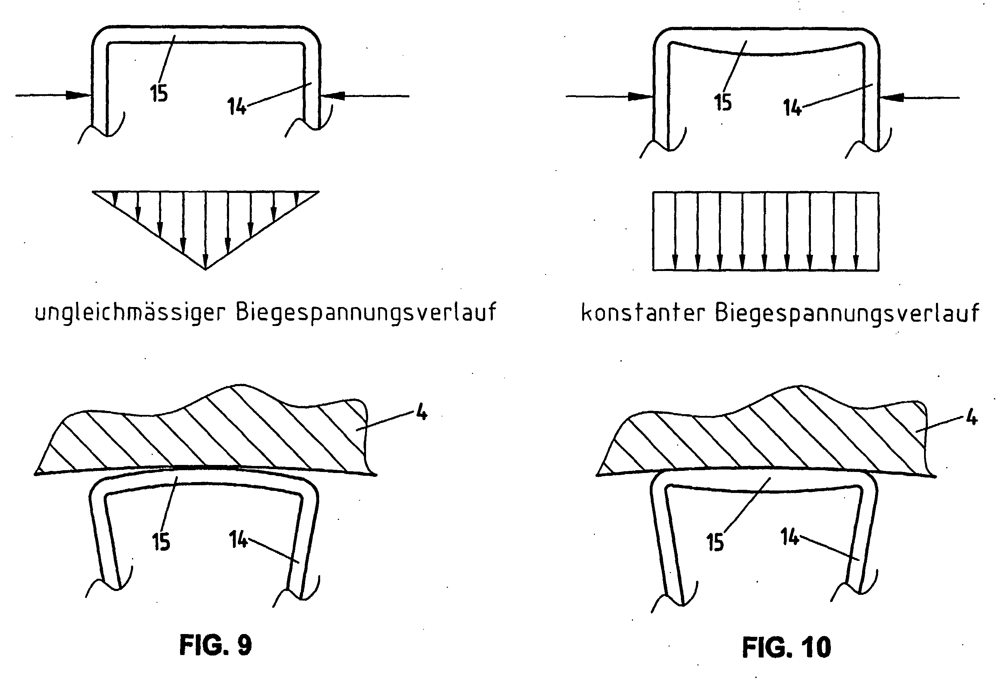

In Fig. 8 sind die Lamellen 14 in zusammengebogenem Zustand dargestellt. Die Stirnseite 15 weist denselben Krümmungsradius auf, wie die Innenoberfläche der Heizmanschette 4 und die Stirnfläche 16 weist denselben Krümmungsradius auf wie die Aussenoberfläche des Extruderrohres 2.

Fig. 9 zeigt einen Teil der Lamellen, die wie im Fall gemäss dem Beispiel der Fig. 3 und 4 ohne Vorverformung gebogen werden. Dargestellt ist der daraus resultierende ungleichmässige Biegespannungsverlauf. Die Stirnseite weist in gebogenem Zustand der Lamellen einen etwa parabelförmigen Verlauf auf und liegt nicht über den ganzen Bereich der Stirnseite 15 der Heizmanschette an, was zu einer schlechten Wärmeübertragung führt.

Fig. 10 illustriert das Beispiel gemäss den Fig. 7 und 8, bei welchem die Stirnseiten 15, 16 mit einer Verdickung versehen sind. Beim Verbiegen der Lamellen 14 ergibt sich ein konstanter Biegespannungsverlauf. Die der Wärmemanschette 4 anliegende Oberfläche der Stirnseite 15 ist ebenfalls zylinderförmig gekrümmt. Sie liegt gleichmässig der Wärmemanschette 4 an, wodurch sich eine sehr gute Wärmeübertragung ergibt.

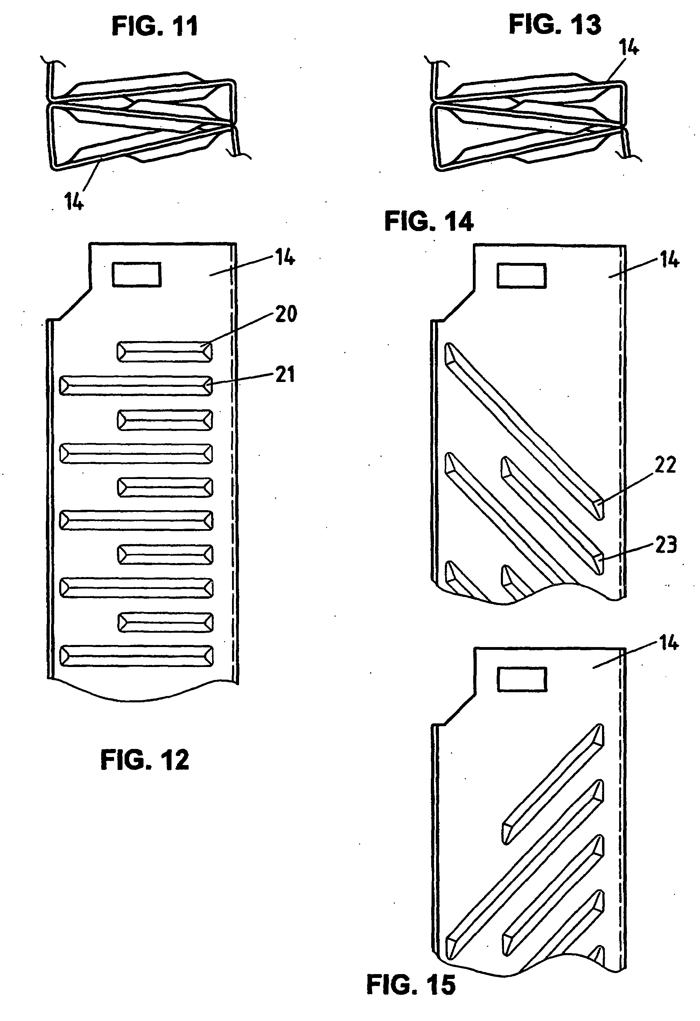

Die Fig. 11 und 12 zeigen eine Ausführungsvariante der Lamellen 14, bei welcher die Lamellen mit Sicken 20 und 21 versehen sind. Die kurzen Sicken 20 stehen dabei nach hinten bezüglich der Zeichnungsebene ab und die langen Sicken nach vorne bezüglich der Zeichnungsebene. Die Sicken dienen zur Verbesserung der statischen Eigenschaften der Lamellen und zur Verwirbelung der Kühlluft und damit zu einer effizienteren Kühlung des Extruderrohres.

Zur Verwirbelung könnten die Lamellen auch gewellt sein. Die Sicken ergeben auch eine Vergrösserung der Oberfläche, was ebenfalls zu einer besseren Kühlung führt.

In den Fig. 13, 14 und 15 ist eine Ausführungsvariante der Lamellen 14 dargestellt, bei welchen die Sicken 22 und 23 schräg angeordnet sind. Die Sicken 22 und 23 sind ebenfalls abwechslungsweise nach hinten oder nach vome bezüglich der Zeichnungsebene von der Lamelle 14 abstehend ausgebildet.

Fig. 15 zeigt die Lamelle eines benachbarten Wärmetauschers gemäss Fig. 2. Der Luftstrom vom Gebläse wird bei der Lamelle gemäss Fig. 14 von links nach rechts und bei Lamelle gemäss Fig. 15 von rechts nach links geführt. Die Sicken der Ausführungsform gemäss den Fig. 13, 14 und 15 dienen der Verwirbelung der Kühlluft und damit einer effizienteren Kühlung des Extrusionszylinders.

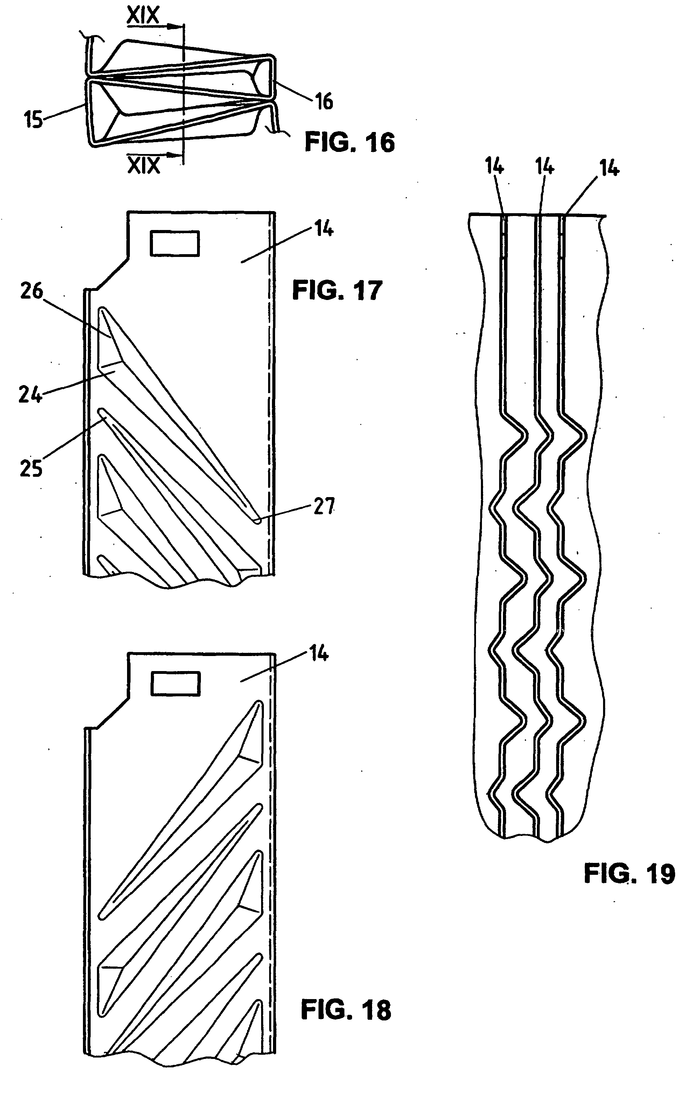

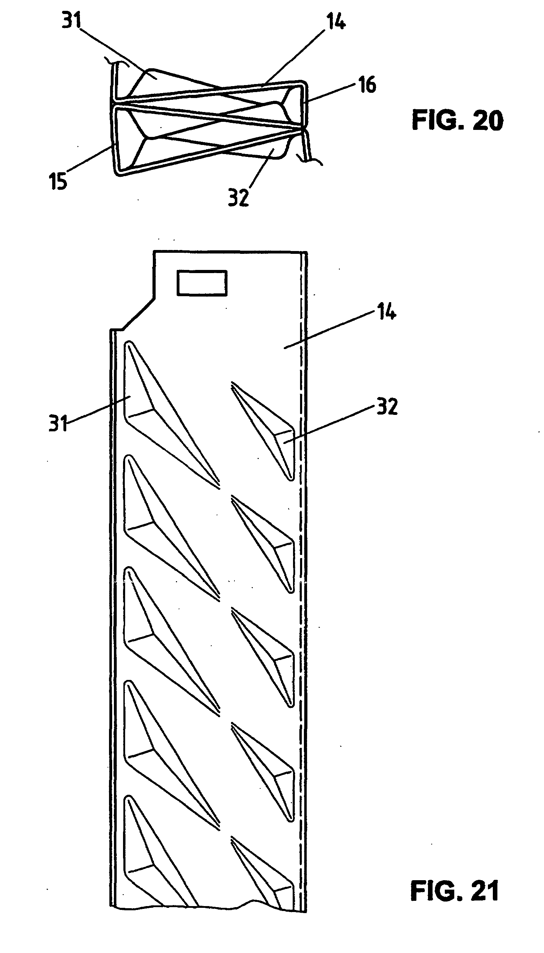

Die Fig. 16, 17 und 18 zeigen eine weitere Ausführungsvariante der Lamellen 14 mit Sicken. Die Sicken 24 und 25 sind ebenfalls abwechslungsweise nach hinten oder nach vorne in bezug auf die Zeichnungsebene von der Lamelle 14 abstehend. Die Sicken weisen ein breiteres Ende 26 und ein schmäleres Ende 27 auf. Das breitere Ende 26 ist der breiteren Stirnfläche 15 und das schmälere Ende 27 der schmäleren Stirnfläche 16 zugewandt. Die Kühlluft strömt bei den Lamellen 14 des vorderen Wärmetauschers von links nach rechts und bei den Lamellen 14 des nächstfolgenden Wärmetauschers von rechts nach links. Diese Sicken dienen ebenfalls der Verwirbelung der Kühlluft und damit einer effizienteren Kühlung.

Fig. 19 zeigt einen Schnitt gemäss Linie XIX-XIX der Fig. 16. Es sind drei Lamellen 14 mit den entsprechenden Sicken ersichtlich.

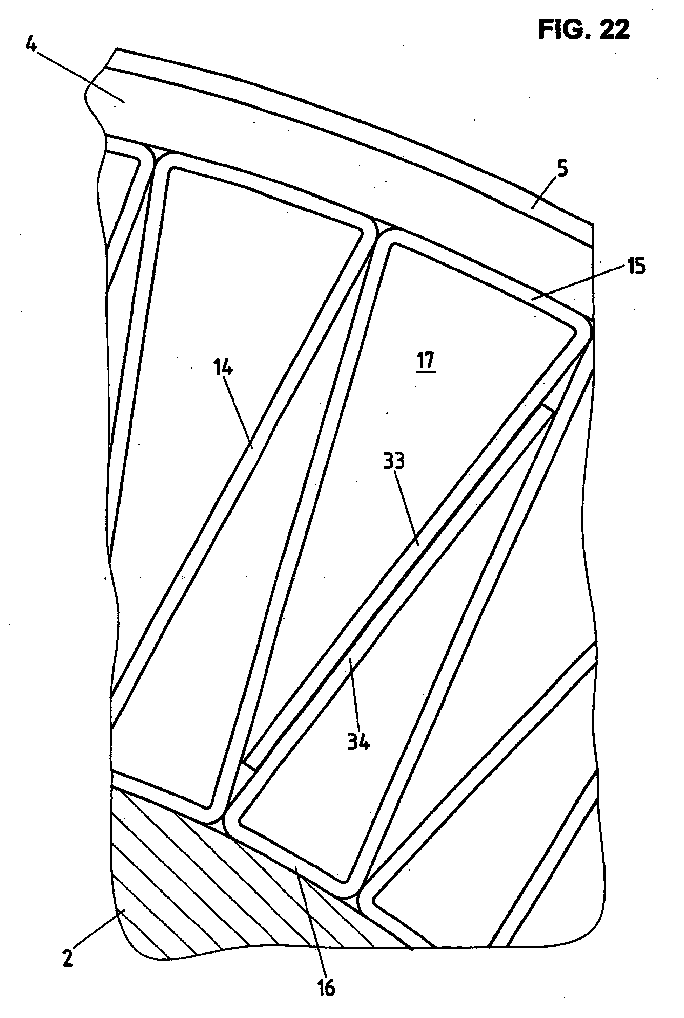

Fig. 20 zeigt einen Teil der Lamellen 14 mit konischen, in der Breite der Lamellen getrennten Sicken 31 und 32,

Fig. 21 zeigt eine Längsansicht einer Lamelle gemäss Fig. 20 mit schräg zur Längsachse der Lamelle verlaufenden, in der Breite der Lamelle getrennten Sicken 31 und 32. Die Sicken 31 stehen auf die eine Seite und die Sicken 32 auf die andere Seite der Lamelle 14 ab. Die Sicken 31 und 32 sind konisch ausgebildet, wobei die breiteren Enden den Rändern der Lamelle 14 zugewandt sind,

Fig. 22 zeigt einen vergrösserten Ausschnitt der Fig. 1. Die bandförmig angeordneten, zusammenhängenden Lamellen 14 überlappen sich an den beiden Enden 33 und 34 des hohlzylinderförmig angeordneten Lamellenbandes.

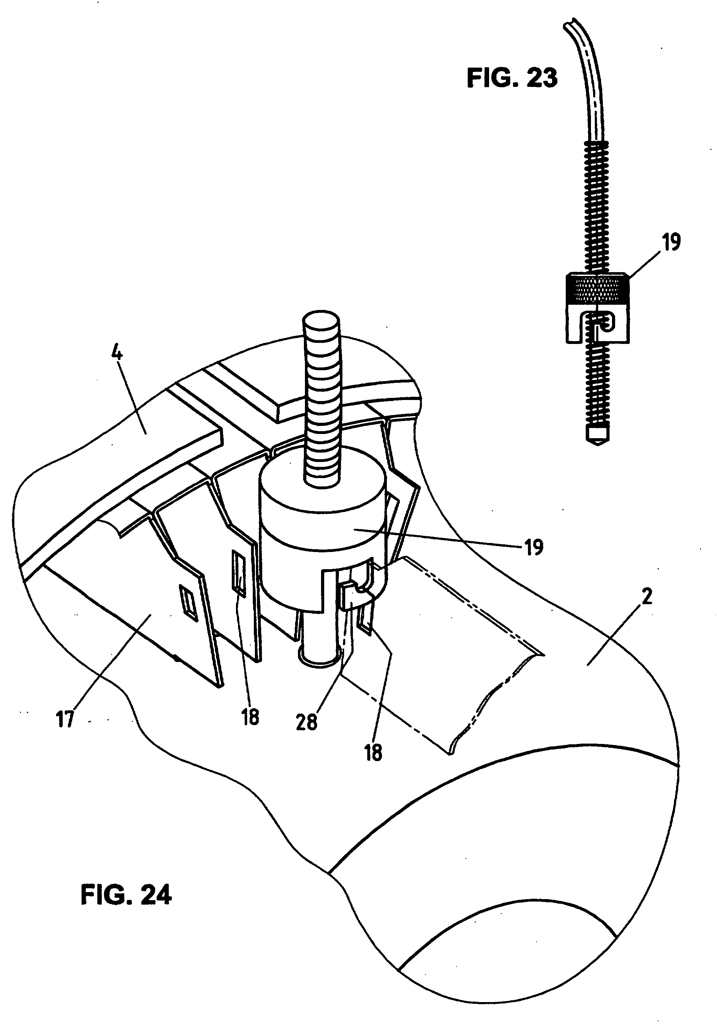

Fig. 23 zeigt in Seitenansicht die Temperaturmesssonde 19.

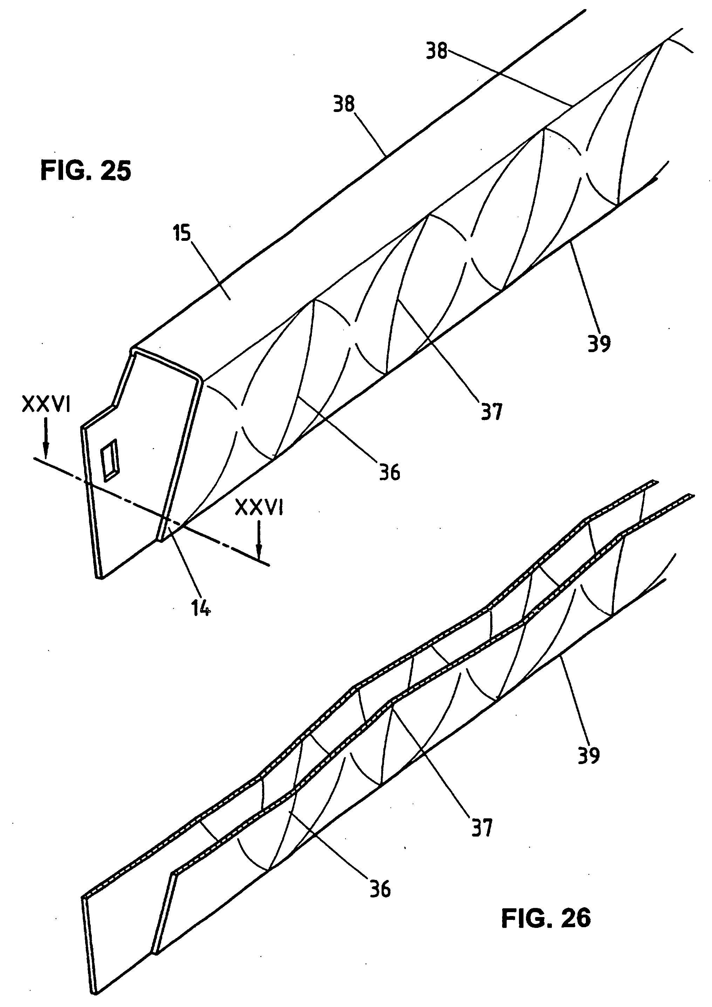

Fig. 24 zeigt in perspektivischer Ansicht die Montage der Temperaturmesssonde im Extrusionszylinder 2. Es ist höchstens jede zweite Lamelle 17 verlängert, damit eine Montage der Messsonde 19 möglich ist. Es könnten auch weniger verlängerte Lamellen 17 vorgesehen sein. Die Messsonde 19 wird mit Haken 28 in die Öffnungen 18 der verlängerten Lamellen 17 eingehängt. Früher musste man in den Extruderstahl ein Gewinde schneiden, um die Temperaturmesssonde hineinzuschrauben. Bei der dargestellten Befestigungsmöglichkeit der Temperaturmesssonde braucht nur noch ein Loch in den Extrusionszylinder gebohrt zu werden und die Messsonde kann in zwei Lamellenenden eingehängt werden.

Fig. 25 zeigt eine perspektivische Darstellung eines Teils einer weiteren Ausführungsform der Heiz- und Kühllamellen 14 mit zickzackförmig angeordneten, entgegengesetzt gewölbten Sicken 36 und 37. Die Profilkanten 38 und 39 bleiben bei dieser Ausführungsform gerade. Die Sicken dienen zu Erhöhung der Knickfestigkeit der Lamellen.

Fig. 26 zeigt einen Schnitt gemäss Linie XXVI-XXVI der Fig. 25.

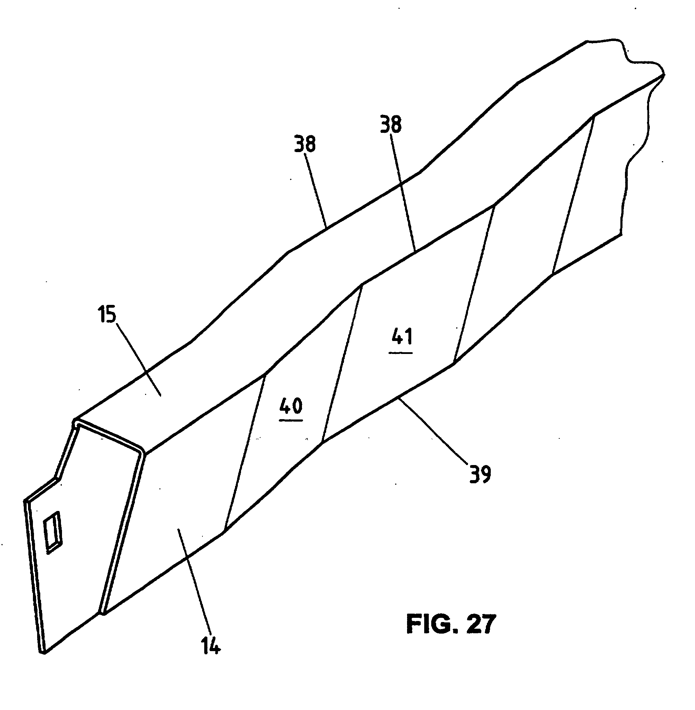

Fig. 27 zeigt eine perspektivische Darstellung eines Teils einer weiteren Ausführungsform der Heiz- und Kühllamellen 14, wobei das ganze Profil eine zickzackförmige Verstärkung aufweist. Die Seitenflächen 40, 41 sind abgewinkelt ausgebildet. Auch die Profilkanten 38 und 39 sind zickzackförmig geformt. Diese in Fig. 27 dargestellte, zickzackförmige Ausbildung dient ebenfalls der Erhöhung der Knickfestigkeit der Lamellen.

Der Wärmetauscher gemäss der Erfindung hat zwei Funktionen, nämlich die Übertragung von Wärme von der Heizmanschette zum Extruder und die Aufheizung desselben auf etwa 230° C. Wenn der Extruder läuft, wird mechanische Energie in Wärme umgesetzt, wobei die Temperatur über 230° C steigt. Zu diesem Zeitpunkt wird Kühlluft durch die Lamellenstruktur geblasen, wobei der Extruder gekühlt wird. Es wird radial angeblasen und axial weitergeführt. Es sollten mindestens zwei Heiz- und Kühlanordnungen elementweise aneinandergereiht werden. Der Wärmetauscher kann allein beim Extrusionszylinder als Heiz- und Kühlanordnung nicht verwendet werden. Es muss immer noch eine Heizmanschette vorhanden sein. Die Wärmemanschette dehnt sich während dem Extrusionsprozess aus und zieht sich zusammen; deshalb wird vorzugsweise die Knickfestigkeit der Lamellen erhöht.

Die Einzugszone von Extrudern und von Spritzgiessmaschinen musste bisher mit Wasser gekühlt werden, da eine Luftkühlung einen zu wenig hohen Wirkungsgrad aufwies. Das ΔT bei Luftkühlung reichte nicht aus. Es musste in der Einzugszone ein "Bohrungslabyrinth" für die Wasserkühlung erstellt werden, welches sehr teuer war. Mit dem erfindungsgemässen Wärmetauscher ist es nun möglich, auch in der Einzugszone von Extrudern und Spritzgiessmaschinen mit Luft zu kühlen, was wesentlich billiger zu stehen kommt. Der Wärmetauscher wird über das gesamte Extruderrohr angewendet Bei der Spritzgiessmaschine wird nur die Einzugszone gekühlt.

## Patentansprüche

1. Extruderrohr (2) mit einem Wärmetauscher (3) und einer Heizmanschette (4), wobei der Wärmetauscher (3) aus mindestens teilweise zusammenhängenden Lamellen (14, 17) besteht, die schräg zueinander verlaufen und hohlzylinderförmig angeordnet sind und bei denen die Stirnseiten (15, 16), welche die Lamellen an ihren Enden verbinden, die Oberflächen des Hohlzylinders bilden, wobei der Wärmetauscher (3) zwischen der Heizmanschette (4) und dem Extruderrohr (2) angeordnet ist.

2. Extruderrohr nach Patentanspruch 1, **dadurch gekennzeichnet, dass** die aussenliegenden Stirnseiten (15) breiter als die innenliegenden Stirnseiten (16) sind.

3. Extruderrohr nach Patentanspruch 1 oder 2, **dadurch gekennzeichnet, dass** abwechslungsweise längere und kürzere Lamellen (14, 17) vorgesehen sind.

4. Extruderrohr nach Patentanspruch 3, **dadurch gekennzeichnet, dass** die längeren Lamellen (17) in ihren Endbereichen je mit einer Öffnung (18) versehen sind.

5. Extruderrohr nach einem der Patentansprüche 1 bis 4, **dadurch gekennzeichnet, dass** die Stirnseiten (15, 16) vor dem Zusammenbiegen der Lamellen (14) von einer planen Fläche abweichend verformt sind.

6. Extruderrohr nach einem der Patentansprüche 1 bis 4, **dadurch gekennzeichnet, dass** die Stirnseiten (15, 16) verdickt sind.

7. Extruderrohr nach Patentanspruch 6, **dadurch gekennzeichnet, dass** die Breite der Verdickung von den Enden (29) der Stirnseiten zu deren Mitte (30) hin zunimmt.

8. Extruderrohr nach einem der vorangehenden Patentansprüche, **dadurch gekennzeichnet, dass** die Lamellen (14, 17) mit Sicken (20, 21) versehen sind.

9. Extruderrohr nach Patentanspruch 8, **dadurch gekennzeichnet, dass** die Sicken (20, 21) abwechselnd auf die beiden Seiten der Lamellen (14) abstehen.

10. Extruderrohr nach Patentanspruch 8 oder 9, **dadurch gekennzeichnet, dass** die Sicken (22, 23) schräg zur Längsachse der Lamellen angeordnet sind.

11. Extruderrohr nach einem der Patentansprüche 8 bis 10, **dadurch gekennzeichnet, dass** die Sicken (24, 25) konisch ausgebildet sind.

12. Extruderrohr nach einem der Patentansprüche 8 bis 11, **dadurch gekennzeichnet, dass** in der Breite der Lamellen (14, 17) mindestens zwei Sicken nebeneinander angeordnet sind.

13. Extruderrohr nach Patentanspruch 8, **dadurch gekennzeichnet, dass** die Sicken (36, 37) abwechslungsweise nach innen und aussen gebogen sind und eine zickzackförmige Struktur der Lamellen erzeugen, wobei Profilkanten (38, 39) gerade verlaufen.

14. Extruderrohr nach einem der Patentansprüche 1 bis 7, **dadurch gekennzeichnet, dass** die Lamellen (14) in zickzackförmig verlaufende Teilflächen (14, 41) abgebogen sind.

15. Extruderrohr nach einem der vorangehenden Patentansprüche, **dadurch gekennzeichnet, dass** mehrere jeweils aus einem Wärmetauscher (3) und einer Heizmanschette (4) bestehende Anordnungen (1) elementweise hintereinander vorgesehen sind, wobei zwischen mindestens zwei Anordnungen (1) eine in das Extruderrohr (2) reichende Temperaturmesssonde (19) an den Lamellen (17) befestigt ist.

16. Extruderrohr nach Patentanspruch 15, **dadurch gekennzeichnet, dass** konzentrisch zur Anordnung (1) ein Rohr mit Kühlgebläse vorgesehen ist.

## Claims

1. Extruder barrel (2) with a heat exchanger (3) and a band-shaped, flexible heating element (4), the heat exchanger (3) consisting of at least partially joined fins (14, 17), running obliquely with respect to one another and are disposed hollow-cylindrically, and in which the sides (15, 16) connecting the fins at their ends form the surfaces of the hollow cylinder, the heat exchanger (3) being disposed between the band-shaped, flexible heating element (4) and the extruder barrel (2).

2. Extruder barrel according to claim 1, **characterised in that** the outer-lying sides (15) are wider than the inner-lying sides (16).

3. Extruder barrel according to claim 1 or 2, **characterised in that** alternately longer and shorter fins (14, 17) are provided.

4. Extruder barrel according to claim 3, **characterised in that** the longer fins (17) are each provided with an aperture (18) in their end regions.

5. Extruder barrel according to one of the claims 1 to 4, **characterised in that**, before the bending together of the fins (14), the sides (15, 16) are shaped so that they deviate from a planar surface.

6. Extruder barrel according to one of the claims 1 to 4, **characterised in that** the sides (15, 16) are thickened.

7. Extruder barrel according to claim 6, **characterised in that** the width of the thickening increases from the ends (29) of the sides toward their middle (30).

8. Extruder barrel according to one of the preceding claims, **characterised in that** the fins (14, 17) are provided with grooves or ridges (20, 21).

9. Extruder barrel according to claim 8, **characterised in that** the grooves or ridges (20, 21) protrude alternately on the two sides of the fins (14).

10. Extruder barrel according to claim 8 or 9, **characterised in that** the grooves or ridges (22, 23) are disposed inclined with respect to the longitudinal axis of the fins.

11. Extruder barrel according to one of the claims 8 to 10, **characterised in that** the grooves or ridges (24, 25) are tapered.

12. Extruder barrel according to one of the claims 8 to 11, **characterised in that** at least two grooves or ridges are disposed next to one another in the width of the fins (14, 17).

13. Extruder barrel according to claim 8, **characterised in that** the grooves or ridges (36, 37) are bent alternately toward the outside and toward the inside, and create a zigzag structure of the fins, profile edges (38, 39) running straight.

14. Extruder barrel according to one of the claims 1 to 7, **characterised in that** the fins (14) are bent into partial surfaces (14, 41) running zigzag.

15. Extruder barrel according to one of the preceding claims, **characterised in that** a plurality of configurations (1), each consisting of a heat exchanger (3) and a band-shaped, flexible heating element (4), are provided as elements one behind the other, a temperature measuring probe (19) extending into the extruder barrel (2) being fixed to the fins (17) between at least two configurations (1).

16. Extruder barrel according to claim 15, **characterised in that** a pipe with a cooling ventilator is provided concentrically with respect to the configuration (1).

## Revendications

1. Tube d'extrudeuse (2) avec un échangeur thermique (3) et un manchon chauffant (4), l'échangeur thermique (3) se composant de lamelles (14, 17) au moins partiellement coopérantes qui s'étendent en diagonale les unes par rapport aux autres et sont disposés en forme de cylindre creux et dont les faces avant (15, 16) qui relient les lamelles par leur extrémités, forment les surfaces supérieures du cylindre creux, l'échangeur thermique (3) étant disposé entre le manchon chauffant (4) et le tube d'extrudeuse (2).

2. Tube d'extrudeuse selon la revendication 1, **caractérisé en ce que** les faces avant extérieures (15) sont plus larges que les faces avant intérieures (16).

3. Tube d'extrudeuse selon la revendication 1 ou 2, **caractérisé en ce qu'**il est prévu en alternance des lamelles plus courtes et plus longues (14, 17).

4. Tube d'extrudeuse selon la revendication 3, **caractérisé en ce que** les lamelles plus longues (17) sont munies dans leurs zones d'extrémité chacune d'une ouverture (18).

5. Tube d'extrudeuse selon l'une des revendications 1 à 4, **caractérisé en ce que** les faces avant (15, 16) sont déformée en s'éloignant d'une surface plane avant le cintrage des lamelles (14).

6. Tube d'extrudeuse selon l'une des revendications 1 à 4, **caractérisé en ce que** les faces avant (15, 16) sont épaissies.

7. Tube d'extrudeuse selon la revendication 6, **caractérisé en ce que** la largeur de l'épaisseur augmente des extrémités (29) des faces avant vers le milieu (30) de ces dernières.

8. Tube d'extrudeuse selon l'une des revendications précédentes, **caractérisé en ce que** les lamelles (14, 17) sont munies de nervures (20, 21).

9. Tube d'extrudeuse selon la revendication 8, **caractérisé en ce que** les nervures (20, 21) font saillie en alternance sur les deux côtés des lamelles (14).

10. Tube d'extrudeuse selon l'une des revendications 8 ou 9, **caractérisé en ce que** les nervures (22, 23) sont disposées en diagonal par rapport à l'axe longitudinal des lamelles.

11. Tube d'extrudeuse selon l'une des revendications 8 à 10, **caractérisé en ce que** les nervures (24, 25) sont réalisées de forme conique.

12. Tube d'extrudeuse selon l'une des revendications 8 à 11, **caractérisé en ce qu'**au moins deux nervures sont disposées dans la largeur des lamelles (14, 17).

13. Tube d'extrudeuse selon la revendication 8, **caractérisé en ce que** les nervures (36, 37) sont fléchies en alternance vers l'intérieur et vers l'extérieur et donnent une structure en zigzag des lamelles, les bords profilés (38, 39) étant droit.

14. Tube d'extrudeuse selon l'une des revendications 1 à 7, **caractérisé en ce que** les lamelles (14) sont courbées en surfaces partielles (14, 41) s'étendant en zigzag.

15. Tube d'extrudeuse selon l'une des revendications précédentes, **caractérisé en ce que** plusieurs dispositifs (1) se composant respectivement d'un échangeur thermique (3) et d'un manchon chauffant (4) sont disposés l'un derrière l'autre par élément, une sonde de mesure de température s'engageant dans le tube d'extrudeuse (19) étant fixée sur les lamelles (17) entre au moins deux dispositifs (1).

16. Tube d'extrudeuse selon la revendication 15, **caractérisé en ce qu'**il est prévu de manière concentrique par rapport au dispositif (1) un tube avec un ventilateur de refroidissement.
